# FASCICULE DE BREVET EUROPEEN

(11) **EP 2 414 652 B1**
(45) Date de publication et mention de la délivrance du brevet: **17.07.2013**
(21) Numéro de dépôt: 10713485.0
(22) Date de dépôt: 23.03.2010
(51) Int. Cl.: F02B 37/02, F02B 37/18, F02M 25/07, F01N 13/10

(54) **MOTEUR A COMBUSTION INTERNE SURALIMENTE**
AUFGELADENER VERBRENNUNGSMOTOR
SUPERCHARGED INTERNAL COMBUSTION ENGINE

(30) Priorité: 30.03.2009 FR 0901538
(43) Date de publication de la demande: 08.02.2012
(73) Titulaire: Melchior, Jean Frédéric, 75006 Paris (FR)
(72) Inventeur: Melchior, Jean Frédéric, 75006 Paris (FR)
(74) Mandataire: Ramey, Daniel
(86) Numéro de dépôt international: PCT/FR2010/000247
(87) Numéro de publication internationale: WO 2010/112689

(56) Documents cités:
- EP-A2- 1 213 468
- WO-A2-2008/090273
- DE-A1- 10 222 919
- DE-A1-102006 019 780
- DE-A1-102006 022 181
- US-A1- 2008 000 228

## Description

L'invention concerne les moteurs à combustion interne alternatifs à 4 temps, en particulier turbocompressés, dont les combustions sont équidistantes dans le temps et qui comportent plusieurs groupes de 2 ou 3 cylindres dont les phases d'échappement n'interfèrent pas entre elles, comme les V12 et les V8 comptant quatre groupes de cylindres ou les 6 et 4 cylindres en V ou en ligne comptant deux groupes de cylindres.

L'invention s'applique plus particulièrement aux moteurs à fort taux de recyclage des gaz brûlés pour réduire les émissions d'oxydes d'azote en mettant en oeuvre le procédé du document FR 2 909 718-A1 qui en décrit une application à un groupe de 4 cylindres. Ce procédé consiste essentiellement à séparer la masse de gaz chauds émise à chaque cycle par un cylindre en une première bouffée très énergétique résultant de la chute de pression lors de l'ouverture des orifices d'échappement qui sera détendue dans une turbine et une deuxième masse résiduelle moins énergétique qui sera refoulée par le piston pendant sa course d'échappement dans un conduit de dérivation communicant avec le collecteur d'admission et / ou avec la sortie de la dite turbine. Il se trouve que la bouffée de gaz détendue jusqu'à la pression d'admission au voisinage du point mort bas du piston représente entre 50% et 60% de la masse totale émise par le cylindre et que le taux de recyclage nécessaire pour éliminer les oxydes d'azote se situe entre 40% et 50%. Cette coïncidence permet de conclure qu'une utilisation sélective de la bouffée et des gaz restant dans le cylindre apporte simultanément une puissance maximale à la turbine, une élimination totale des oxydes d'azote et une perte par pompage des pistons voisine de zéro.

Dans la variante où le conduit de dérivation ne communique pas avec le collecteur d'admission, la pression dans le conduit de dérivation peut être très inférieure à la pression d'admission et s'approcher de la pression atmosphérique quand il communique avec la sortie de la turbine. Dans ce cas, la deuxième masse de gaz chauds refoulée par les pistons ne représente plus qu'une faible fraction de la masse totale émise à chaque cycle qui sera presque intégralement détendue dans la turbine. Cette variante permet d'améliorer le rendement d'un moteur à 4 temps en générant un travail positif pendant le cycle de transvasement admission-échappement.

La présente invention a notamment pour but d'étendre l'application de ce procédé à des moteurs comportant plusieurs groupes de cylindres reliés à une même turbine à distributeur non divisé, et d'optimiser son impact sur la réduction de la consommation de carburant et des émissions polluantes.

Il est déjà connu de détendre les bouffées de pression émises par le collecteur d'échappement d'un groupe de 2 ou 3 cylindres dans une turbine affectée à ce groupe ou dans une turbine commune à plusieurs groupes dont le distributeur est divisé. Cette méthode perd néanmoins de son efficacité quand on ouvre de façon permanente un orifice dans le collecteur d'échappement pour dériver une fraction des gaz brûlés vers le collecteur d'admission ou vers la sortie d'une turbine. En effet, cette sortie supplémentaire avale une partie de la bouffée qui n'est pas détendue dans la turbine. Le document précité règle ce problème en fermant périodiquement l'orifice de dérivation pendant la détente de la bouffée et en garantissant ainsi que la totalité de la bouffée est détendue dans la turbine. L'efficacité du concept augmentant avec le nombre des cylindres qui alimentent une même turbine, il est avantageux de relier tous les collecteurs du moteur à une turbine unique dont le distributeur n'est pas divisé. Pour ce faire, il faut organiser la confluence des collecteurs à l'entrée de la turbine sans créer des communications qui permettraient aux bouffées de l'un d'eux de remonter dans un autre.

En première approximation, le temps nécessaire à la détente d'une bouffée d'échappement est inversement proportionnel à la section débitante de la turbine. Ainsi, pour une turbine à section fixe, la durée angulaire de la bouffée est proportionnelle à la vitesse de rotation du moteur. Or, la durée angulaire de la bouffée ne doit pas trop dépasser 60 degrés encadrant le point mort bas du piston pour minimiser le travail négatif du cycle de transvasement (pertes par pompage). Une augmentation de la section de turbine s'impose donc pour annuler l'effet d'une augmentation de vitesse. L'application de l'invention à des moteurs à vitesse variable (traction routière) s'articulera donc, de préférence, autour d'une turbine à section variable dont le distributeur comporte des ailettes pivotantes disposées autour du rotor.

Par ailleurs, la durée de la bouffée étant fixée à 60 degrés vilebrequin, la période angulaire séparant deux bouffées consécutives, période où la turbine est alimentée par des gaz peu énergétiques , est inversement proportionnelle au nombre de cylindres qui alimentent la turbine. Cette période est respectivement de : 180 degrés pour 3 cylindres ; 120 degrés pour 4 cylindres; 60 degrés pour 6 cylindres ; 40 degrés pour 8 cylindres ; 0 degrés pour 12 cylindres. Ces chiffres montrent l'intérêt d'augmenter le nombre de cylindres alimentant une même turbine pour minimiser la fraction des gaz peu énergétiques qui l'alimentent. Une turbine unique recevra donc les bouffées de tous les cylindres du moteur.

Ainsi la turbine des moteurs à 8 ou 12 cylindres détend majoritairement des bouffées très énergétiques. Pour les plus petits nombres de cylindres, soit la turbine est partiellement alimentée par des gaz moins énergétiques, soit la durée angulaire des bouffées est allongée au prix d'une perte par pompage des pistons.

Avec les contraintes précédentes, le problème à résoudre est d'alimenter une turbine unique à partir de plusieurs (en pratique 2 ou 4) collecteurs d'échappements reliés chacun à un groupe de 2 ou 3 cylindres dont les phases d'échappement n'interfèrent pas entre elles, de façon à éviter qu'une bouffée prenant naissance dans l'un des collecteurs ne remonte dans un autre collecteur.

De plus, les moyens à prévoir doivent aussi permettre de mettre en communication chaque cylindre avec le conduit de dérivation pendant la course de refoulement du piston, conformément au document précité.

L'invention propose à cet effet un moteur à combustion interne alternatif fonctionnant sur le cycle à 4 temps avec des combustions équidistantes dans le temps et comportant N groupes de 2 ou 3 cylindres dont les phases d'échappement n'interfèrent pas entre elles, cylindres dont les orifices d'admission sont reliés à un collecteur d'admission commun aux N groupes et dont les orifices d'échappement sont reliés entre eux par un collecteur d'échappement individuel qui communique avec un conduit de dérivation de façon que la communication soit coupée avant l'ouverture des soupapes d'échappement de chaque cylindre du groupe et soit rétablie avant la fermeture desdites soupapes, caractérisé en ce que chaque collecteur d'échappement est relié à l'une des N entrées d'un obturateur à N voies dont la sortie unique est reliée à l'entrée d'une turbine commune aux N groupes, obturateur commandé de façon à ouvrir une communication exclusive entre la turbine et chaque collecteur d'échappement, au moins pendant la durée des bouffées d'échappement émises par un des cylindres qu'il vidange.

Selon l'invention, l'entrée de gaz de la turbine unique est donc équipée d'un obturateur comportant plusieurs entrées (en pratique 2 ou 4) reliées chacune à un collecteur d'échappement et une seule sortie reliée à l'entrée de gaz de la turbine. L'obturateur est commandé de façon à mettre périodiquement la turbine en communication exclusive avec chaque collecteur d'échappement au moins pendant la bouffée d'échappement d'un des cylindres qu'il vidange. Cette période angulaire exclusive, commune à tous les collecteurs, dépend donc de la durée de la bouffée, idéalement inférieure à 60 degrés de rotation du vilebrequin. En dehors de cette période exclusive, la turbine peut communiquer avec deux collecteurs qui n'émettent pas de bouffée et où la pression est celle du conduit de dérivation.

En option, le même obturateur peut assurer la mise en communication périodique de chaque collecteur d'échappement avec le conduit de dérivation.

Selon d'autres caractéristiques de l'invention :
- la turbine est mise en communication périodique avec chaque collecteur d'échappement pendant des périodes angulaires de rotation du vilebrequin identiques et équidistantes, au moins égales à 720 degrés divisés par le nombre de cylindres du moteur, périodes englobant la durée des bouffées émises par un des cylindres qu'il vidange,
- la turbine est mise en communication avec deux collecteurs d'échappement au début et à la fin de chaque période angulaire, avant et après la durée des bouffées émises par un des cylindres qu'ils vidangent, pendant l'ouverture et la fermeture simultanées des deux entrées de l'obturateur auxquelles ils sont reliés.

En pratique, les moteurs les plus répandus comportent un nombre pair de cylindres divisés en deux ou quatre groupes de 2 ou 3 cylindres. Pour la suite de la description on se limitera donc à N=2 (4 et 6 cylindres) et N=4 (8 et 12 cylindres).

Dans le cas d'un moteur comportant deux ou quatre groupes de deux ou trois cylindres :
- l'obturateur comporte une chambre cylindrique fixe, ouverte axialement vers la turbine, et dont la paroi cylindrique comporte 2 ou 4 lumières rectangulaires identiques et également réparties angulairement, en regard d'un boisseau rotatif coaxial tournant à la vitesse de l'arbre moteur pour les groupes de deux cylindres et à 1,5 fois cette vitesse pour les groupes de trois cylindres,
- le boisseau rotatif comporte un disque circulaire ajusté à la paroi cylindrique de la chambre et perpendiculaire à l'axe de rotation, et le disque porte un secteur de paroi cylindrique coaxial et ajusté à la surface et se développant axialement vers la turbine au dessus des lumières,
- le moteur comporte deux groupes de cylindres, l'obturateur comporte deux lumières disposées à 180 degrés et le secteur cylindrique se développe sur un angle de 180 degrés,
- le moteur comporte quatre groupes de cylindres, l'obturateur comporte quatre lumières disposées à 90 degrés et le secteur cylindrique se développe sur un angle de 270 degrés,
- le disque est situé axialement sous les lumières et le secteur cylindrique couvre toute la hauteur des lumières,
- le disque est situé sensiblement à mi-hauteur des lumières, le secteur cylindrique ne couvre que la partie supérieure des lumières communiquant avec la turbine et il porte sur sa face inférieure un second secteur cylindrique ajusté à la surface qui couvre la partie inférieure des lumières communiquant avec un conduit de dérivation via un orifice débouchant dans la partie inférieure de la chambre cylindrique,
- le secteur est calé pour fermer la communication entre le conduit de dérivation et un collecteur d'échappement pendant la durée de la bouffée émise par un des cylindres qu'il vidange,
- la section débitante de la turbine est choisie pour que la durée angulaire de la bouffée soit voisine de 60 degrés.
- la vitesse du moteur est variable et la section de la turbine augmente avec la vitesse du moteur pour régler la durée angulaire de la bouffée,
- le conduit de dérivation communique avec le collecteur d'admission,
- le conduit de dérivation est isolé du collecteur d'admission (2) et communique avec la sortie de la turbine,
- la turbine entraîne le compresseur de suralimentation du moteur,
- l'arbre de la turbine est relié au vilebrequin du moteur ou à un récepteur de puissance auxiliaire.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- La figure 1 est une vue schématique d'un premier mode de réalisation de l'invention appliqué à un moteur suralimenté à 12 cylindres en V où la communication échappement-admission est aménagée dans les culasses ;
- La figure 2 est une vue schématique d'un second mode de réalisation de l'invention appliqué à un moteur suralimenté à 12 cylindres en V à culasses non modifiées où la communication admission échappement s'établit via l'obturateur à 4 voies ;
- Les figures 3A et 3B représentent une coupe axiale et une coupe transversale de l'obturateur tournant 14 alimentant la turbine de la figure 1 ;
- Les figures 4A, 4B et 4C représentent une coupe axiale et deux coupes transversales d'un obturateur tournant alimentant la turbine et gérant la communication entre les circuits d'échappement et d'admission de la figure 2 ;
- Les figures 5A et 5B représentent les pressions instantanées dans les collecteurs d'admission et d'échappement du moteur à 12 cylindres de la figure 2 ainsi qu'à l'entrée de la turbine et à la sortie du compresseur ;
- La figure 6 est une variante de la figure 2 où le conduit de dérivation est isolé du collecteur d'admission ;
- Les figures 7A et 7B sont des variantes des figures 5A et 5B correspondant à la configuration de la figure 6.

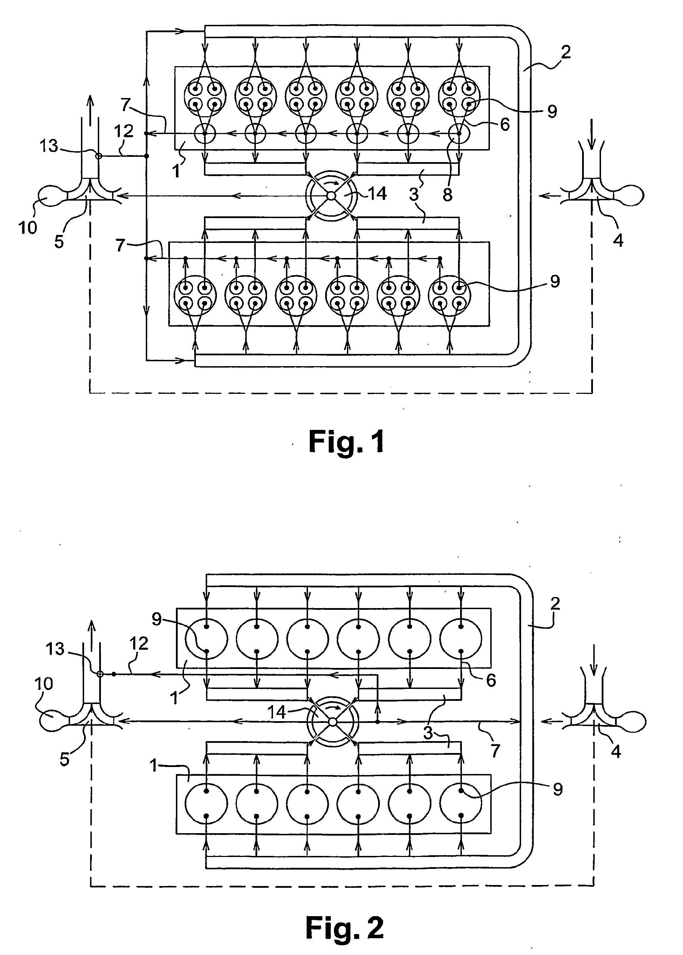

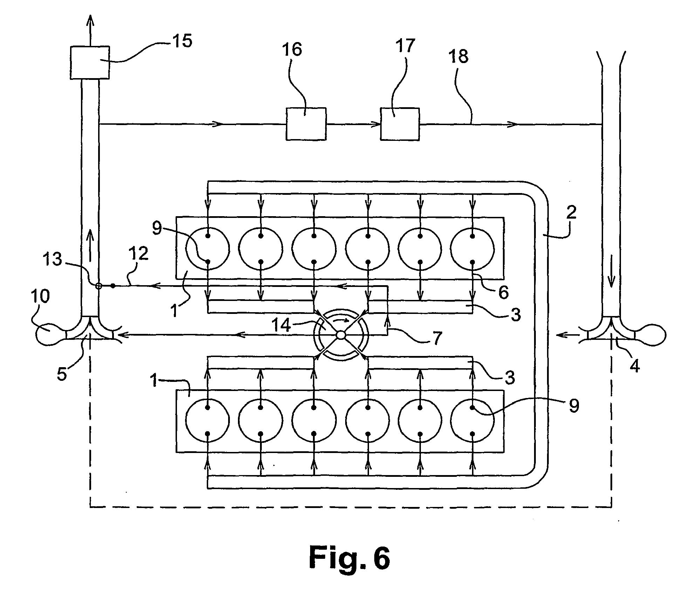

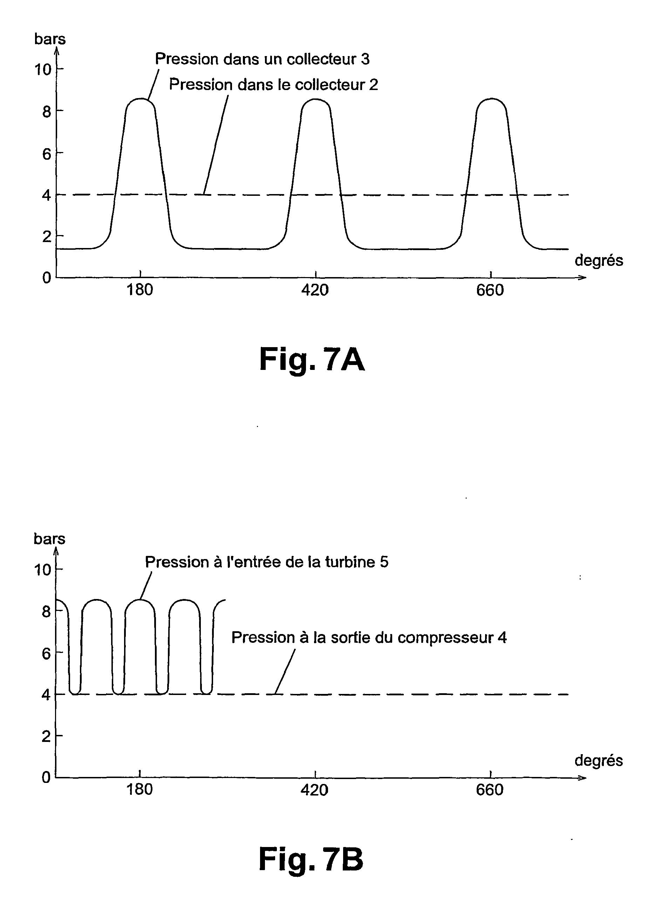

De façon générale, les figures 1 à 5 concernent une réalisation avec un conduit de dérivation communicant avec le collecteur d'admission et les figures 6 et 7 une réalisation avec un conduit de dérivation isolé du collecteur d'admission.

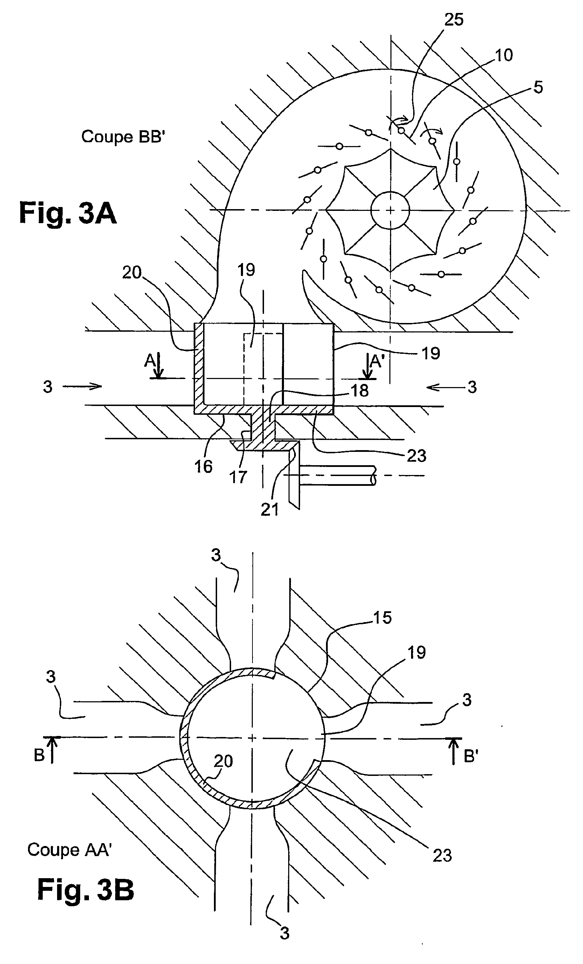

On se réfère d'abord aux figures 1 et 3 dans lesquelles la référence 1 désigne un moteur alternatif à 4 temps et à 12 cylindres en V ouvert à 60 degrés répartis en quatre groupes de trois cylindres allumant successivement tous les 60 degrés de rotation de l'arbre moteur. Le moteur 1 comporte un collecteur d'admission 2 commun aux 12 cylindres et quatre collecteurs d'échappement 3 de volume minimal reliés respectivement aux orifices d'échappement 6 de chaque groupe de 3 cylindres.

Le collecteur d'admission 2 est alimenté en air par un compresseur 4 entraîné par une turbine 5 dont le distributeur 10 à géométrie variable est constitué par un anneau d'ailettes pivotantes.

Deux exemples de cheminement des gaz brûlés recyclés sont représentés sur la figure 1.

Sur le banc de cylindres du haut de la figure, un conduit de recyclage 7 communs aux six cylindres relie les orifices d'échappement 6 via des soupapes d'isolement 8 au collecteur d'admission 2. Les soupapes d'isolement 8 de chaque groupe de cylindres ferment la communication entre son collecteur 3 et le conduit de recyclage 7 avant l'ouverture des soupapes d'échappement 9 de chaque cylindre du groupe et ouvrent ladite communication avant la fermeture desdites soupapes 9. Le positionnement des soupapes d'isolement 8 au plus près des soupapes d'échappement 9 permet de réduire au minimum le volume des collecteurs 3 sans créer de résistance au refoulement des gaz recyclés qui n'empruntent pas ces collecteurs .Les soupapes 8 de chaque groupe de cylindres peuvent être actionnées simultanément par un arbre à came spécifique entraîné en synchronisme par le vilebrequin à 1,5 fois la vitesse de ce dernier ou être actionnées successivement par des cames supplémentaires portées par l'arbre à cames d'échappement du moteur.

L'autre banc de cylindres montre un autre cheminement des gaz recyclés envisageable sur les moteurs à grand rapport alésage/course et faible vitesse de piston dont chaque cylindre comporte deux grandes soupapes d'échappement débitant vers deux sorties de culasse séparées reliées respectivement à un collecteur 3 et au conduit 7. La soupape reliée au collecteur 3 s'ouvre avant le point mort bas du piston pour décharger la pression du cylindre vers la turbine. La soupape reliée au conduit 7 assure la fonction de la soupape d'isolement 8 en s'ouvrant après la bouffée pour refouler les gaz résiduels vers le collecteur d'admission 2. La communication entre les collecteurs 3 et le collecteur d'admission 2 passe alors par l'intérieur des cylindres. Cette solution très simple présente l'inconvénient d'augmenter les pertes par pompage et de réduire l'efficacité des pulsations de pression.

En option, un conduit de dérivation 12 équipé d'une vanne 13 de réglage du débit qui la traverse relie les conduits de recyclage 7 à la sortie de la turbine 5. La vanne 13 permet d'affiner le taux de recyclage des gaz brûlés et l'excès d'air de combustion du moteur et de limiter la pression d'admission aux régimes élevés.

Les orifices d'échappement 6 des quatre groupes de trois cylindres sont reliés à quatre collecteurs individuels 3 situés à l'intérieur du V. Chaque collecteur d'échappement 3 est relié à une des quatre entrées 19 d'un obturateur à boisseau rotatif 14. La configuration des manivelles du vilebrequin et l'ordre d'allumage des cylindres sont choisis pour que les collecteurs 3 émettent successivement une bouffée dans l'ordre d'ouverture des lumières auxquelles ils sont reliés.

L'obturateur 14 comporte un carter fixe d'axe vertical formant une cavité cylindrique fermée vers le bas par un fond 16, qui porte le palier 17 du rotor 18 et le couple 21 de pignons coniques conduits par l'arbre moteur, et ouverte vers le haut sur l'entrée de gaz de la turbine 5. La paroi cylindrique intérieure 15 du carter comporte quatre lumières rectangulaires 19 de surfaces sensiblement égales à la section des collecteurs 3 et disposées angulairement tous les 90 degrés. Pour la suite de la description, le développement angulaire de chaque lumière 19 est arbitrairement fixé à 20 degrés. Chacune des lumières 19 est reliée à un collecteur 3 dans l'ordre d'allumage des cylindres.

Le rotor 18, qui tourne à 1,5 fois la vitesse de l'arbre moteur, comporte une paroi cylindrique 20 coaxiale à la paroi intérieure 15 du carter et ajustée sur cette dernière avec un jeu minimal. La paroi 20 du rotor est ouverte sur un secteur de 90 degrés de façon à fermer trois lumières 19 quand la quatrième est entièrement ouverte et à maintenir la même section d'alimentation de la turbine pendant la transition d'une lumière à la suivante. Dans ces conditions, la turbine est alimentée par un seul collecteur 3 sur 70 degrés de rotor, soit 47 degrés de vilebrequin et alimentée par deux collecteurs 3 pendant 20 degrés de rotor, soit 13 degrés de vilebrequin.

Il est clair que le rotor est calé pour que son ouverture coïncide avec les axes de deux lumières adjacentes au moment où les pulsations dans les collecteurs correspondants se croisent. La section du distributeur de la turbine peut être réglée, de façon connue, par le pivotement simultané des ailettes 25 sur leur axe pour ajuster la durée angulaire des bouffées en fonction du compromis taux de recyclage/ excès d'air exigé par la combustion. La turbine est ainsi alimentée par des bouffées successives dans l'ordre où elles sont émises par les 12 cylindres du moteur. L'obturateur ci-dessus conviendrait à un moteur à 8 cylindres quand on le fait tourner à la vitesse de l'arbre moteur.

Pour 4 et 6 cylindres, la paroi 15 comporterait seulement deux lumières 19 disposées à 180 degrés et la paroi 20 serait ouverte sur 180 degrés, le rotor tournant à la vitesse moteur pour 4 cylindres et à 1,5 fois la vitesse moteur pour 6 cylindres.

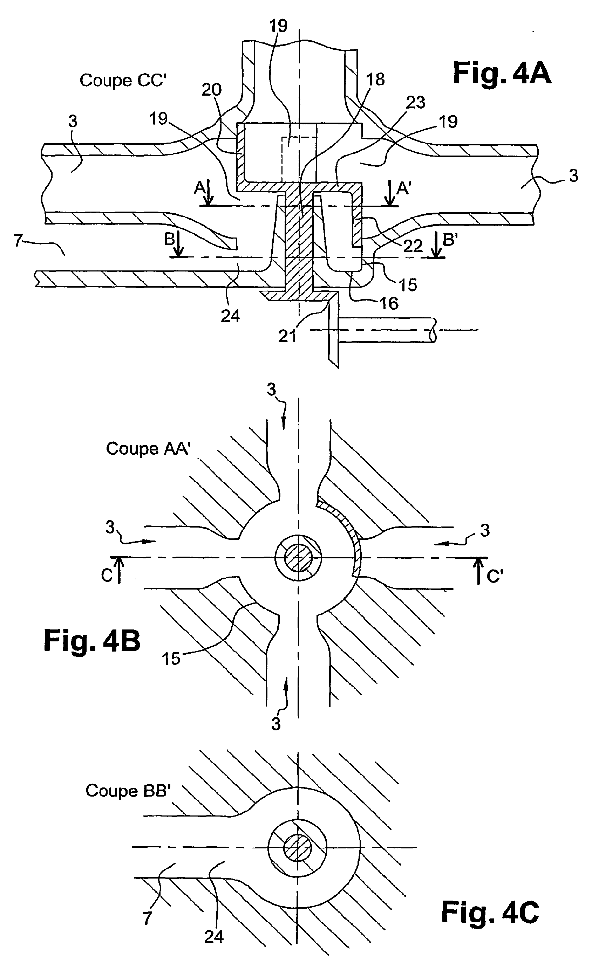

On se réfère maintenant aux figures 2 et 4.

Il est aussi possible d'exploiter l'invention sans modifier la culasse des moteurs en utilisant une variante de l'obturateur 14 qui, en plus de leur communication avec la turbine, gère aussi la communication entre les collecteurs d'échappement 3 et le collecteur d'admission 2.

La variante du distributeur 14 représentée sur la figure 4 porte les mêmes références et est représentée dans la même position que celle de la figure 3. Elle est associée à un moteur V12 dépourvu de soupapes d'isolement 8 représenté en figure 2. Les deux conduits de recyclage 7 sont ici remplacés par un conduit de dérivation unique 7 reliant une deuxième sortie 24 de l'obturateur 14 au collecteur d'admission 2.

Cette variante se distingue de l'obturateur précédent par le fait que la paroi cylindrique 15 du carter fixe comporte une deuxième sortie 24 située axialement entre les lumières 19 et le fond 16. De plus, le disque 23 du rotor 18 est situé axialement sensiblement à mi-hauteur des lumières 19 et porte un deuxième secteur de paroi cylindrique 22 sur sa face inférieure. Ce secteur cylindrique 22 se développe sur 90 degrés et sa hauteur axiale s'arrête au bord supérieur de l'ouverture 24. Le secteur 22 prolonge l'ouverture du secteur 20 de façon à ce que, simultanément, le rotor 18 ouvre la communication entre un collecteur 3 et la turbine et ferme la communication entre ce collecteur 3 et le conduit de dérivation 7 et vice versa.

Comme précédemment, cette variante est adaptable aux moteurs à 4, 6 et 8 cylindres avec les modifications déjà décrites. Il faut de plus adapter le développement angulaire et le calage de la paroi 22 pour qu'elle ferme une demi-lumière 19 pendant la durée de la bouffée. Ce développement angulaire sera donc limité à 90 degrés pour 4 et 8 cylindres et à 120 degrés pour 6 et 12 cylindres.

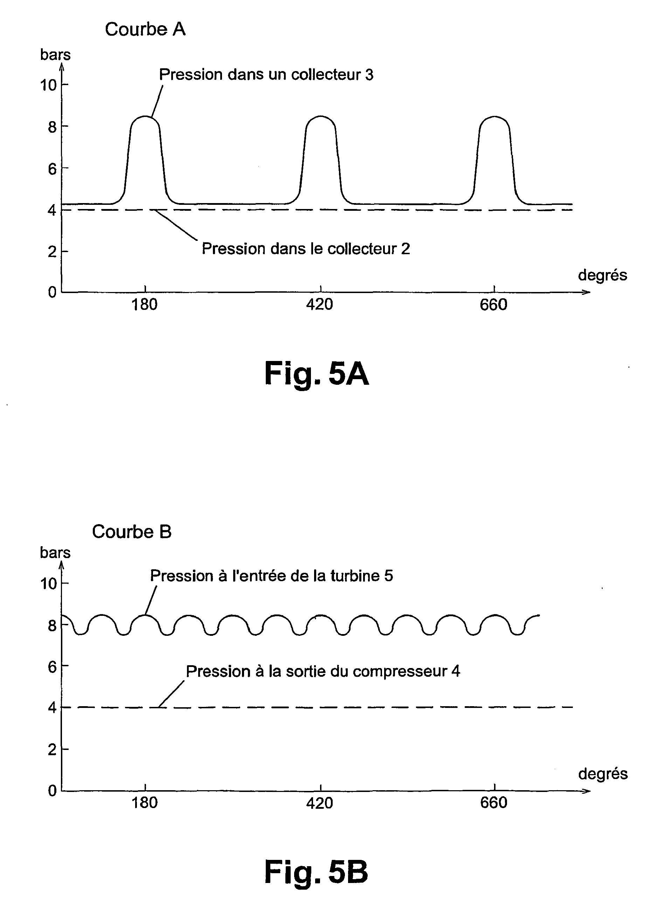

On se réfère maintenant à la figure 5 qui montre les pressions instantanées en fonction de la position de l'arbre d'un moteur à 12 cylindres : A dans le collecteur d'admission 2 en pointillé et dans un collecteur d'échappement 3 en trait plein ; B à la sortie du compresseur 4 en pointillé et à l'entrée de la turbine 5 en trait plein. On voit sur ces courbes que la turbine 5 alimentée par des gaz dont la pression moyenne peut atteindre deux fois la pression délivrée par le compresseur 4, développe une puissance excédentaire substantielle. Il est généralement avantageux d'associer l'invention à deux turbocompresseurs fonctionnant en série, le turbocompresseur décrit précédemment constituant le compresseur haute pression. La réfrigération de l'air entre les compresseurs diminue le travail de compression et amplifie l'excès de puissance développé par les turbines. Cette puissance excédentaire peut être renvoyée sur l'arbre moteur par un dispositif « turbo-compound » pour augmenter la puissance et le rendement du moteur. Pour les grands moteurs équipés de turbocompresseurs à rendements élevés, le gain de puissance et de rendement peut dépasser 10%. Une configuration avantageuse consiste alors à relier la turbine 5 à l'arbre qui entraîne l'obturateur tournant 14 via un réducteur de vitesse et à disposer une turbine de suralimentation en aval de la turbine 5. Le réglage du distributeur variable 10 permet alors de répartir l'enthalpie des gaz d'échappement entre la compression de l'air et la puissance récupérée sur l'arbre moteur.

On se réfère maintenant à la figure 6 qui représente le moteur de la figure 2 dont la communication entre le conduit de dérivation 7 et le collecteur d'admission 2 a été coupée. La totalité du flux dérivé emprunte alors le conduit 12 vers la sortie de la turbine 5. Le conduit 12 est de préférence largement dimensionné pour que la pression y soit sensiblement constante malgré les fluctuations du débit qui l'alimente. Quand la vanne 13 est en pleine ouverture, cette pression est celle de la sortie de la turbine 5.

Dans les cas où des gaz brûlés doivent être recyclés pour limiter les émissions de NOx, un conduit de recyclage 18 relie la sortie de la turbine 5 à l'entrée du compresseur 4 via un filtre à particules 16 et un réfrigérant 17. Les gaz non recyclés sont rejetés à l'atmosphère via un dispositif de post-traitement 15. En variante, le conduit de recyclage 18 peut prélever ses gaz en aval du dispositif 15 et rejoindre l'entrée du compresseur via un simple réfrigérant 17. La pression qui règne dans le conduit de dérivation 7 est alors la pression atmosphérique augmentée de la perte de charge créée par le dispositif 15 qu'on s'efforce de réduire au minimum.

La turbine 5 peut comporter deux étages de détente et le compresseur 4 peut comporter deux étages de compression. Dans ce cas, il peut être avantageux de prévoir un conduit reliant le conduit 12 à l'espace inter turbine via une vanne d'obturation.

On se réfère maintenant aux figures 7A et 7B.

La figure 7A montre la pression instantanée dans chaque collecteur 3 quand la vanne 13 est en pleine ouverture. On voit que la pression de refoulement des gaz brûlés est voisine de la pression atmosphérique alors que la pression d'admission est de 4 bars. Pendant les phases de transvasement, le moteur développe une pression moyenne indiquée de 3 bars qui s'ajoute au travail fourni par le cycle fermé du moteur.

La figure 7B montre la pression instantanée à l'entrée de la turbine 5 dont la valeur moyenne est nettement supérieure à la pression d'admission.

Quand la totalité de la puissance de la turbine 5 (monoétagée ou bi-étagée) est absorbée par le compresseur 4 (monoétagé ou bi-étagé) qu'elle entraîne, la pression régnant dans le collecteur d'admission 2 peut dépasser le seuil compatible avec la résistance mécanique du moteur quand celui-ci fonctionne à forte charge. Il est avantageux dans ce cas de fermer prématurément les soupapes d'admission pour détendre partiellement l'air admis pendant la couse d'aspiration (cycle Miller).

On peut aussi prélever la puissance excédentaire sur l'arbre de la turbine 5 comme décrit précédemment.

## Revendications

1. Moteur à combustion interne alternatif fonctionnant sur le cycle à 4 temps avec des combustions équidistantes dans le temps et comportant N groupes de deux ou trois cylindres dont les phases d'échappement n'interfèrent pas entre elles, cylindres dont les orifices d'admission sont reliés à un collecteur d'admission (2) commun aux N groupes et dont les orifices d'échappement (6) sont reliés entre eux par un collecteur d'échappement individuel (3) qui communique avec un conduit de dérivation (7) de façon que la communication soit coupée avant l'ouverture des soupapes d'échappement (9) de chaque cylindre du groupe et soit rétablie avant la fermeture desdites soupapes d'échappement, **caractérisé en ce que** chaque collecteur d'échappement (3) est relié à l'une des N entrées (19) d'un obturateur (14) dont la sortie unique est reliée à l'entrée d'une turbine (5) commune aux N groupes, cet obturateur étant commandé de façon à ouvrir une communication exclusive entre la turbine (5) et chaque collecteur d'échappement (3) au moins pendant la durée des bouffées d'échappement émises par un des cylindres qu'il vidange.

2. Moteur selon la revendication 1, **caractérisé en ce que** la turbine (5) est mise en communication périodique avec chaque collecteur d'échappement (3) pendant des périodes angulaires de rotation du vilebrequin identiques et équidistantes, au moins égales à 720 degrés divisés par le nombre de cylindres du moteur, périodes englobant la durée des bouffées émises par un des cylindres qu'il vidange.

3. Moteur selon la revendication 2, **caractérisé en ce que** la turbine (5) est mise en communication avec deux collecteurs d'échappement (3) au début et à la fin de chaque période angulaire, avant et après la durée des bouffées émises par un des cylindres qu'ils vidangent, pendant l'ouverture et la fermeture simultanées des deux entrées (19) de l'obturateur (14) auxquelles ils sont reliés.

4. Moteur selon l'une des revendications 1 à 3, **caractérisé en ce que** l'obturateur (14) comporte une chambre cylindrique fixe, ouverte axialement vers la turbine, et dont la paroi cylindrique (15) comporte N lumières rectangulaires (19) identiques et également réparties angulairement, en regard d'un boisseau rotatif coaxial (18) tournant à la vitesse de l'arbre moteur pour les groupes de deux cylindres et à 1,5 fois cette vitesse pour les groupes de trois cylindres.

5. Moteur selon la revendication 4 dont le boisseau rotatif (18) comporte un disque circulaire (23) ajusté à la paroi (15) et perpendiculaire à l'axe de rotation, **caractérisé en ce que** le disque (23) porte un secteur de paroi cylindrique (20) coaxial et ajusté à la surface (15) et se développant axialement vers la turbine au dessus des lumières (19).

6. Moteur selon la revendication 5, comportant deux groupes de cylindres, **caractérisé en ce que** l'obturateur (14) comporte deux lumières (19) disposées à 180 degrés et **en ce que** le secteur cylindrique (20) se développe sur un angle de 180 degrés.

7. Moteur selon la revendication 4, comportant quatre groupes de cylindres et **caractérisé en ce que** l'obturateur (14) comporte quatre lumières (19) disposées à 90 degrés et **en ce que** le secteur cylindrique (20) se développe sur un angle de 270 degrés.

8. Moteur selon l'une des revendications 4 à 7, **caractérisé en ce que** le disque (23) est situé axialement sous les lumières (19) et **en ce que** le secteur cylindrique (20) couvre toute la hauteur des lumières (19).

9. Moteur selon l'une des revendications 4 à 7 et dont le disque (23) est situé sensiblement à mi-hauteur des lumières (19), **caractérisé en ce que** le secteur (20) ne couvre que la partie supérieure des lumières (19) communiquant avec la turbine (5) et **en ce qu'**il porte sur sa face inférieure un second secteur cylindrique (22) ajusté à la surface (15) qui couvre la partie inférieure des lumières (19) communiquant avec un conduit de dérivation (7) via un orifice (24) débouchant dans la partie inférieure de la chambre cylindrique.

10. Moteur selon la revendication 9, **caractérisé en ce que** le secteur (22) est calé pour fermer la communication entre le conduit de dérivation (7) et un collecteur d'échappement (3) pendant la durée de la bouffée émise par un des cylindres qu'il vidange.

11. Moteur selon la revendication 1, **caractérisé en ce que** la section débitante de la turbine est choisie pour que la durée angulaire de la bouffée soit voisine de 60 degrés.

12. Moteur selon la revendication 11, **caractérisé en ce que** la vitesse du moteur est variable et que la section du distributeur de la turbine (5) augmente avec la vitesse du moteur pour régler la durée angulaire de la bouffée.

13. Moteur selon l'une des revendications 1 à 12, **caractérisé en ce que** le conduit de dérivation (7) communique avec le collecteur d'admission (2) ou est isolé du collecteur d'admission (2) et communique avec la sortie de la turbine (5).

14. Moteur selon l'une des revendications précédentes, **caractérisé en ce que** la turbine (5) entraîne le compresseur (4) de suralimentation du moteur.

15. Moteur selon la revendication 14, **caractérisé en ce que** l'arbre de la turbine (5) est relié au vilebrequin du moteur ou à un récepteur de puissance auxiliaire.

## Patentansprüche

1. Hubkolben-Verbrennungsmotor im 4-Taktbetrieb mit zeitlich gleichbeabstandeten Verbrennungen, und der N Gruppen von zwei oder drei Zylindern umfasst, deren Ausstoßphasen einander nicht überlagern, deren Ansaugöffnungen mit einem Ansaugsammler (2) verbunden sind, der den N Gruppen gemeinsam ist, und deren Auslassöffnungen (6) durch einen eigenen Auslasssammler (3) miteinander verbunden sind, der mit einem Bypass (7) derart in kommunizierender Verbindung steht, dass die Kommunikation vor dem Öffnen von Auslassventilen (9) jedes Zylinders der Gruppe unterbrochen wird und vor dem Schließen dieser Auslassventile wiederhergestellt wird, **dadurch gekennzeichnet, dass** jeder Auslasssammler (3) mit einem der N Eingänge (19) eines Verschlusses (14) verbunden ist, dessen einziger Ausgang mit dem Eingang einer Turbine (5) verbunden ist, die den N Gruppen gemeinsam ist, wobei dieser Verschluss derart angesteuert wird, dass eine ausschließliche Kommunikation zwischen der Turbine (5) und einem jeweiligen Auslasssammler (3) mindestens während der Dauer der Abgasströme geöffnet wird, die von einem der Zylinder abgegeben werden, wenn er sich entleert.

2. Motor nach Anspruch 1, **dadurch gekennzeichnet, dass** die Turbine (5) während identischer und gleichbeabstandeter Rotationswinkelperioden der Kurbelwelle, die mindestens gleich 720 Grad geteilt durch die Anzahl der Zylinder im Motor betragen, periodisch mit jedem Auslasssammler (3) in kommunizierende Verbindung gebracht wird, wobei die Perioden die Dauer der Gasströme umfasst, die von einem der Zylinder ausgegeben werden, wenn er sich entleert.

3. Motor nach Anspruch 2, **dadurch gekennzeichnet, dass** die Turbine (5) mit zwei Auslasssammlern (3) zu Beginn und am Ende jeder Winkelperiode, vor und nach der Dauer der Gasströme, die von einem der Zylinder ausgegeben werden, wenn sie sich entleeren, während des gleichzeitigen Öffnens und Schließens der beiden Eingänge (19) des Verschlusses (14), mit dem sie verbunden sind, in kommunizierende Verbindung gebracht wird.

4. Motor nach einem der Ansprüche 1 bis 3, **dadurch gekennzeichnet, dass** der Verschluss (14) eine festgelegte zylindrische Kammer umfasst, die axial zur Turbine geöffnet ist und deren zylindrische Wand (15) N rechteckige Durchbrüche (19) umfasst, die identisch und im Winkel gleich verteilt, einem koaxialen Drehschieber (18) zugeordnet sind, der sich für die Gruppen von zwei Zylindern mit der Geschwindigkeit der Motorwelle und für die Gruppen von drei Zylindern mit dem 1,5-fachen dieser Geschwindigkeit dreht.

5. Motor nach Anspruch 4, wobei der Drehschieber (18) eine kreisförmige Scheibe (23) aufweist, die an die Wand (15) angepasst und senkrecht zur Rotationsachse ist, **dadurch gekennzeichnet, dass** die Scheibe (23) einen Sektor einer Zylinderwand (20) koaxial und angepasst an die Fläche (15) trägt und sich axial in Richtung zur Turbine über den Durchbrüchen (19) erstreckt.

6. Motor nach Anspruch 5, umfassend zwei Gruppen von Zylindern, **dadurch gekennzeichnet, dass** der Verschluss (14) zwei Durchbrüche (19) aufweist, die in 180 Grad angeordnet sind und dadurch, dass der zylindrische Sektor (20) sich über einen Winkel von 180 Grad erstreckt.

7. Motor nach Anspruch 4, umfassend vier Gruppen von Zylindern und **dadurch gekennzeichnet, dass** der Verschluss (14) vier Durchbrüche (19) aufweist, die in 90 Grad angeordnet sind und dadurch, dass der zylindrische Sektor (20) sich über einen Winkel von 270 Grad erstreckt.

8. Motor nach einem der Ansprüche 4 bis 7, **dadurch gekennzeichnet, dass** die Scheibe (23) axial unter den Durchbrüchen (19) gelegen ist und dadurch, dass der zylindrische Sektor (20) die gesamte Höhe der Durchbrüche (19) abdeckt.

9. Motor nach einem der Ansprüche 4 bis 7 und wobei die Scheibe (23) im Wesentlichen auf halber Höhe der Durchbrüche (19) gelegen ist, **dadurch gekennzeichnet, dass** der Sektor (20) nur den oberen Teil der Durchbrüche (19) abdeckt, die mit der Turbine (5) in kommunizierender Verbindung stehen, und dadurch, dass er auf seiner Unterseite einen zweiten zylindrischen Sektor (22) trägt, der an die Fläche (15) angepasst ist, die den unteren Teil der Durchbrüche (19) abdeckt, die mit einem Bypass (7) über eine Öffnung (24) in kommunizierender Verbindung stehen, die in den unteren Teil der zylindrischen Kammer mündet.

10. Motor nach Anspruch 9, **dadurch gekennzeichnet, dass** der Sektor (22) dazu ausgebildet ist, die kommunizierende Verbindung zwischen dem Bypass (7) und einem Auslasssammler (3) während der Dauer des Gasstroms, der von einem der Zylinder ausgegeben wird, wenn er sich entleert, zu schließen.

11. Motor nach Anspruch 1, **dadurch gekennzeichnet, dass** der Austrittsabschnitt der Turbine so gewählt ist, dass die Winkelstrecke des Gasstroms nahe 60 Grad liegt.

12. Motor nach Anspruch 11, **dadurch gekennzeichnet, dass** die Geschwindigkeit des Motors variabel ist und dass der Querschnitt des Verteilers der Turbine (5) mit der Geschwindigkeit des Motors zunimmt, um die Winkelstrecke des Gasstroms zu regeln.

13. Motor nach einem der Ansprüche 1 bis 12, **dadurch gekennzeichnet, dass** der Bypass (7) mit dem Ansaugsammler (2) in kommunizierender Verbindung steht oder vom Ansaugsammler (2) isoliert ist und mit dem Ausgang der Turbine (5) in kommunizierender Verbindung steht.

14. Motor nach einem der vorhergehenden Ansprüche, **dadurch gekennzeichnet, dass** die Turbine (5) den Kompressor (4) zur Motoraufladung antreibt.

15. Motor nach Anspruch 14, **dadurch gekennzeichnet, dass** die Welle der Turbine (5) mit der Kurbelwelle des Motors oder einem Hilfskraftverbraucher verbunden ist.

## Claims

1. Reciprocating internal combustion engine operating on a four-stroke cycle with equally-distant combustions in time and comprising N groups of two or three cylinders of which the exhaust phases do not interfere with one another, cylinders of which the inlet ports are linked to an inlet manifold (2) that is common to the N groups and of which the exhaust ports (6) are linked together by an individual exhaust manifold (3) which communicates with a bypass conduit (7) in such a way that the communication is cut off before the opening of the exhaust valves (9) of each cylinder of the group and is re-established before the closing of said exhaust valves, **characterized in that** each exhaust manifold (3) is linked to one of the N inlets (19) of a shutter (14) of which the single outlet is linked to the inlet of a turbine (5) that is common to the N groups, this shutter being controlled in such a way as to open an exclusive communication between the turbine (5) and each exhaust manifold (3) at least during the duration of the puffs of exhaust gases emitted by one of the cylinders that it is emptying.

2. Engine according to claim 1, **characterized in that** the turbine (5) is placed into periodic communication with each exhaust manifold (3) during the angular periods of rotation of the crankshaft that are identical and equally-distant, at least equal to 720 degrees divided by the number of cylinders of the engine, periods encompassing the duration of the puffs emitted by one of the cylinders that it is emptying.

3. Engine according to claim 2, **characterized in that** the turbine (5) is placed into communication with two exhaust manifolds (3) at the beginning and at the end of each angular period, before and after the duration of the puffs emitted by one of the cylinders that they are emptying, during the simultaneous opening and closing of the two inlets (19) of the shutter (14) to which they are linked.

4. Engine according to one of claims 1 to 3, **characterized in that** the shutter (14) comprises a fixed cylindrical chamber, open axially towards the turbine, and of which the cylindrical wall (15) comprises N identical rectangular slots (19) and also distributed angularly, across from a coaxial rotating spool (18) rotating at the speed of the drive shaft for groups of two cylinders and at 1.5 times this speed for groups of three cylinders.

5. Engine according to claim 4 of which the rotating spool (18) comprises a circular disk (23) adjusted to the wall (15) and perpendicular to the axis of rotation, **characterized in that** the disk (23) carries a sector with cylindrical wall (20) coaxial and adjusted to the surface (15) and which is developed axially towards the turbine above the slots (19).

6. Engine according to claim 5, comprising two groups of cylinders, **characterized in that** the shutter (14) comprises two slots (19) arranged at 180 degrees and **in that** the cylindrical sector (20) is developed over an angle of 180 degrees.

7. Engine according to claim 4, comprising four groups of cylinders and **characterized in that** the shutter (14) comprises four slots (19) arranged at 90 degrees and **in that** the cylindrical sector (20) is developed over an angle of 270 degrees.

8. Engine according to one of claims 4 to 7, **characterized in that** the disk (23) is located axially under the slots (19) and **in that** the cylindrical sector (20) covers the entire height of the slots (19).

9. Engine according to one of claims 4 to 7 and of which the disk (23) is located substantially at mid-height of the slots (19), **characterized in that** the sector (20) covers only the upper portion of the slots (19) communicating with the turbine (5) and **in that** it carries on its lower face a second cylindrical sector (22) adjusted to the surface (15) which covers the lower portion of the slots (19) communicating with a bypass conduit (7) via a port (24) exiting into the lower portion of the cylindrical chamber.

10. Engine according to claim 9, **characterized in that** the sector (22) is wedged in order to close the communication between the bypass conduit (7) and an exhaust manifold (3) during the duration of the puff emitted by one of the cylinders that it is emptying.

11. Engine according to claim 1, **characterized in that** the discharge section of the turbine is chosen so that the angular duration of the puff is in the neighborhood of 60 degrees.

12. Engine according to claim 11, **characterized in that** the speed of the engine is variable and that the section of the nozzle of the turbine (5) increases with the speed of the engine in order to adjust the angular duration of the puff.

13. Engine according to one of claims 1 to 12, **characterized in that** the bypass conduit (7) communicates with the inlet manifold (2) or is isolated from the inlet manifold (2) and communicates with the outlet of the turbine (5).

14. Engine according to one of the preceding claims, **characterized in that** the turbine (5) drives the supercharging compressor (4) of the engine.

15. Engine according to claim 14, **characterized in that** the shaft of the turbine (5) is linked to the crankshaft of the engine or to an auxiliary power take-off.
